# EUROPEAN PATENT APPLICATION

(11) **EP 3 309 015 A1**
(43) Date of publication of application: **18.04.2018**
(21) Application number: 16827692.1
(22) Date of filing: 13.07.2016
(51) Int. Cl.: B60R 11/02, B60K 35/00, B60K 37/00, G02B 27/01

(54) **DISPLAY DEVICE**

(30) Priority: 17.07.2015 JP 2015143441
(71) Applicant: Pioneer Corporation, Tokyo 113-0021 (JP); Tohoku Pioneer Corporation, Tendo-shi, Yamagata 994-8585 (JP)
(72) Inventor: SAITOU, Kazuhiro, Tendo-shi Yamagata 994-8585 (JP); KAWAMURA, Kenji, Tendo-shi Yamagata 994-8585 (JP); SUZUKI, Toru, Tendo-shi Yamagata 994-8585 (JP)
(74) Representative: Manitz Finsterwald Patentanwälte PartmbB
(86) International application number: PCT/JP2016/070753
(87) International publication number: WO 2017/014132

(57) **Abstract**

A display apparatus includes: a housing including a pair of opposed side plate portions; a moving mechanism provided on at least one of the side plate portions, the moving mechanism including a first cam structure and a second cam structure extending along the at least one side plate portion; and a display member including a first pin engaged with the first cam structure and a second pin engaged with the second cam structure, wherein the first cam structure includes a first region parallel to the second cam structure, and a second region bent away from the second cam structure in a bottom end portion of the first cam structure.

## Description

### TECHNICAL FIELD

The present invention relates to a display apparatus.

### BACKGROUND ART

In recent years, head-up displays have started being mounted, for example, near a driver's seat of a vehicle. An example of a head-up display is a display apparatus that displays own vehicle information, road information, navigation information, and the like on a translucent display member called image combiner (hereinafter, referred to simply as a combiner). For example, the head-up display displays the above-mentioned driving support information as a virtual image in front of the windshield. The driving support information is visually recognized by the driver as if superimposed on the landscape in front of the vehicle. The head-up display can thus provide the driving support information for the driver without the driver often moving his/her line of sight.

For example, Patent Literature 1 discloses a vehicle display apparatus including a combiner moving mechanism that lifts up and down a combiner between a developed position and a retracted position by performing a bending operation or extending operation of a link mechanism including a combiner holder and a rotating arm.

### CITATION LIST

### PATENT LITERATURE

Patent Literature 1: Japanese Patent Application Laid-Open No. 2014-205376

### SUMMARY OF INVENTION

### TECHNICAL PROBLEM

For example, a head-up display is mounted on a vehicle's dashboard in an embedded manner. For example, the head-up display includes a housing which accommodates a combiner. For example, the combiner is moved (developed) from the housing to above the dashboard when in operation (for example, during driving of the vehicle). For example, an area serving as a path of irradiation light to the combiner when in operation is provided in the housing.

On the other hand, there is compactification of apparatuses mounted inside the vehicle, for example, in the dashboard of the vehicle. For example, the vehicle display apparatus disclosed in Patent Literature 1 uses a rotation mechanism for moving the combiner, and the moving mechanism occupies a large space. The apparatus itself thus becomes large in size, and has not always been able to be installed in the dashboard of limited dimensions.

Moreover, even if the apparatus can be installed in the dashboard, movement of components mounted inside the apparatus, such as the combiner, can be severely restricted.

The present invention has been achieved in view of the foregoing, and an example of an object thereof is to provide a display apparatus that is applicable inside the dashboard of limited dimensions.

### SOLUTION TO PROBLEM

A display apparatus according to claim 1 includes: a housing including a pair of opposed side plate portions; a moving mechanism provided on at least one of the side plate portions, the moving mechanism including a first cam structure and a second cam structure extending along the at least one side plate portion; and a display member including a first pin engaged with the first cam structure and a second pin engaged with the second cam structure, wherein the first cam structure includes a first region parallel to the second cam structure, and a second region bent away from the second cam structure in a bottom end portion of the first cam structure.

### BRIEF DESCRIPTION OF DRAWINGS

FIG. 1 is a perspective view of a display apparatus according to an embodiment of the present invention when in a display operation.
FIG. 2 is a perspective view of the display apparatus according to the embodiment of the present invention when not in a display operation.
FIG. 3 is a partially cutaway perspective view schematically showing an internal structure of the display apparatus according to the embodiment of the present invention.
FIG. 4 is a perspective view of a combiner unit of the display apparatus according to the embodiment of the present invention.
FIG. 5 is a perspective view of the display apparatus 10 when the combiner unit of the display apparatus according to the embodiment of the present invention is in a retracted position.
FIG. 6 is a perspective view of a cover portion of a side plate portion SP of the display apparatus according to the embodiment of the present invention, seen from inside.
FIG. 7 is an internal view of the display apparatus when the combiner unit according to the embodiment of the present invention is developed.
FIG. 8 is an internal view of the display apparatus when the combiner unit according to the embodiment of the present invention is retracted.
FIG. 9 is an internal view of the display apparatus during movement of the combiner unit according to the embodiment of the present invention between when the combiner unit is developed and when the combiner unit is retracted.
FIG. 10 is a diagram for describing the movement of the combiner unit and a shutter of the display apparatus according to the embodiment of the present invention.
FIG. 11 is a diagram for describing the movement of the combiner unit and the shutter of the display apparatus according to the embodiment of the present invention.
FIG. 12 is a schematic diagram for describing the movement of the combiner unit and the shutter of the display apparatus according to the embodiment of the present invention.

### DESCRIPTION OF EMBODIMENTS

An embodiment of the present invention will be described below.

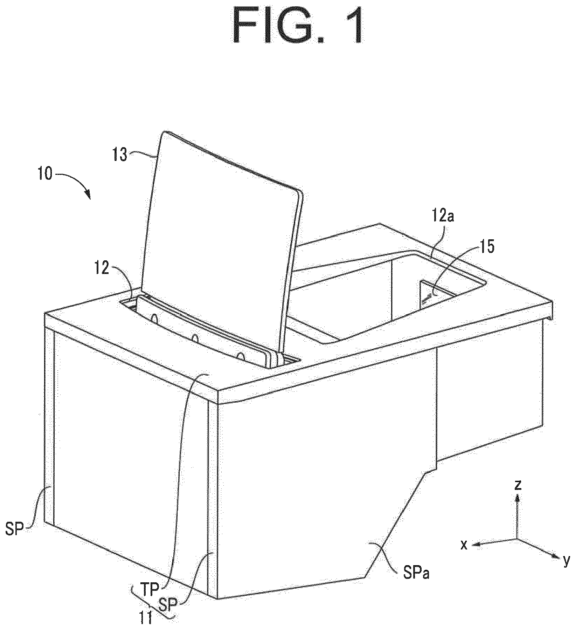

FIG. 1 is a perspective view of a display apparatus 10 according to the embodiment of the present invention. FIG. 1 shows the display apparatus 10 when in a display operation (hereinafter, referred to simply as in operation). For example, the display apparatus 10 is a head-up display. A housing 11 of the display apparatus 10 includes a top plate TP. Two openings 12 and 12a are separately formed in the top plate TP. The display apparatus 10 further includes a combiner unit 13 which is a display member moving through the opening 12. As employed herein, a direction in which the observer (not shown) views the front of the combiner unit 13 will be referred to as a depth direction (x-axis direction). A far-side direction refers to the direction of the arrow of the x-axis in the diagram. A horizontal direction orthogonal to the x-axis direction will be referred to as a width direction (y-axis direction) of the housing 11. A direction orthogonal to both the depth direction and the width direction of the housing 11 will be referred to as a height direction (z-axis direction) of the housing 11. The use position of the combiner unit 13 by the user when the display apparatus 10 is in operation, as shown in FIG. 1, will be referred to as a developed position. When the combiner unit 13 is in the developed position, part of the combiner unit 13 protrudes from the housing 13.

If the display apparatus 10 is mounted in the dashboard of a vehicle, the display apparatus 10 is arranged on a near side of the windshield (now shown). A virtual image is formed on the far side of the combiner unit 13 by irradiation light from the opening 12a. In the present embodiment, for example, the combiner unit 13 includes a slightly curved plate-shaped combiner portion that bulges out to the far side. For example, the combiner portion is made of a translucent member such as a light-transmitting resin member like a plastic.

For example, the display apparatus 10 is connected to a detection apparatus (not shown) that detects a position, speed, moving direction, peripheral situation, and the like of the vehicle on which the display apparatus 10 is mounted. For example, the display apparatus 10 is connected to a navigation apparatus (not shown) mounted on the vehicle. For example, when in operation, driving support information (such as information indicating the speed of the own vehicle, a distance to a preceding vehicle, and instructions for left and right turns at intersections) based on information input from the detection apparatus, the navigation apparatus, and the like is displayed on the combiner unit 13.

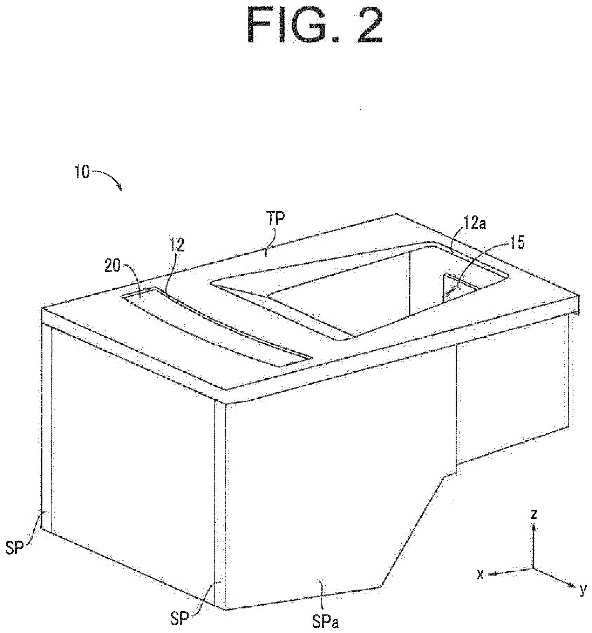

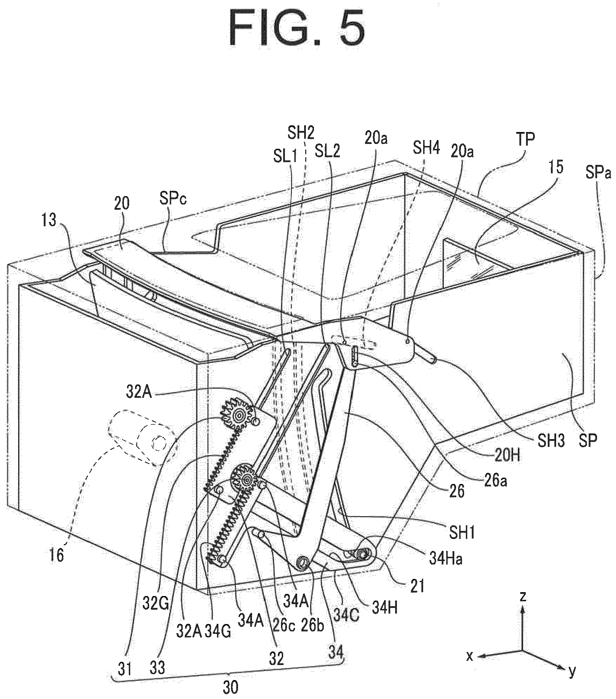

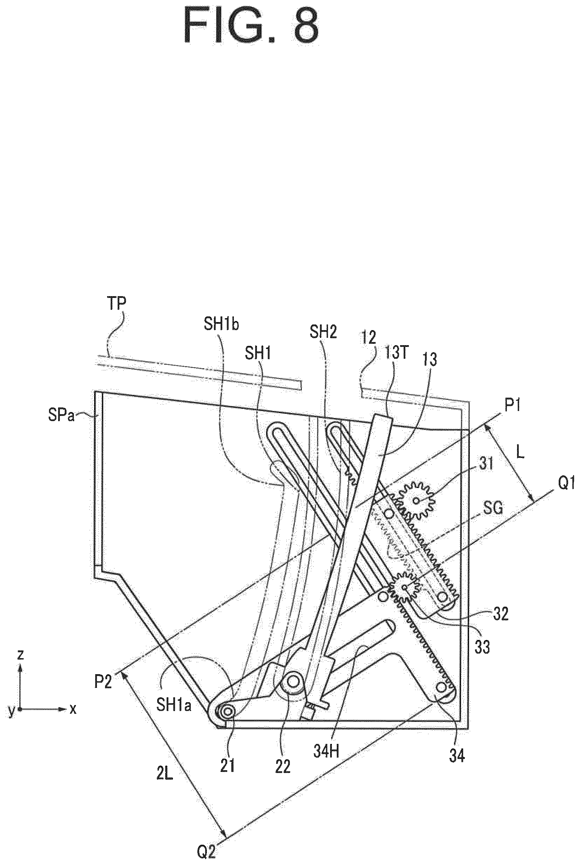

FIG. 2 is a perspective view of the display apparatus 10 when not in a display operation (hereinafter, referred to as not in operation). The position of the combiner unit 13 when the display apparatus 10 is not in operation, shown in FIG. 2, is shown in FIGs. 5 and 8. The position will be referred to as a retracted position. If the combiner unit 13 is in the retracted position, the entire combiner unit 13 is retracted in the housing 11.
The display apparatus 10 includes a shutter 20 which closes the entire opening 12 when the combiner unit 13 is in the retracted position. In the present embodiment, for example, the shutter 20 has the shape of a flat plate that blocks the opening 12 and has a light shielding property. The shutter 20 closes the opening 12 when the combiner unit 13 not in operation is retracted in the housing 11. On the other hand, the shutter 20 is accommodated in the housing 11 to open the opening 12 when the combiner unit 13 is moving and when the combiner unit 13 is in operation (the state shown in FIG. 1). The shutter 20 can prevent dropping of foreign objects and intrusion of sunlight into the display apparatus 10 not in operation.

Specifically, for example, before power-on (before the engine of the vehicle is started), the combiner unit 13 is retracted in the housing 11 and the opening 12 is closed by the shutter 20. Next, immediately after power-on, the shutter 20 starts to open the opening 12. Next, if the shutter 20 is detected to have fully opened the opening 12 by a sensor or the like, the combiner unit 13 starts to move through the opening 12. After the combiner unit 13 moves to the developed position, a display operation on the combiner unit 13 is started. When the power is turned off, the combiner unit 13 moves to the retracted position in the housing 11 and the shutter 20 closes the opening 12.

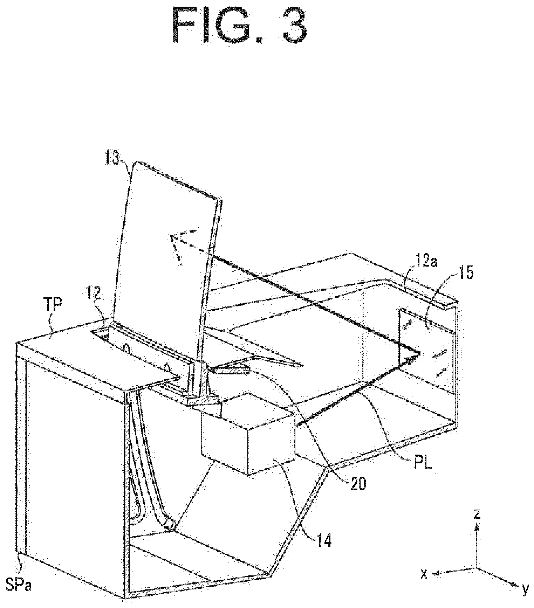

FIG. 3 is a partially cutaway perspective view schematically showing an internal structure of the display apparatus 10 when in operation. In the present embodiment, the shutter 20 is retracted to the near side of the combiner unit 13. The display apparatus 10 includes a light source 14 and a reflection member 15 which are accommodated in the housing 11.

The light source 14 is located in a position different from a moving path of the shutter 20 in the housing 10 (between a retracted position and a closed position) and a moving path of the combiner unit 13 (moving path between the retracted position and the developed position). In particular, the light source 14 is located in a position not interfering with the movement of the shutter 20 and the combiner unit 13. For example, the light source 14 generates irradiation light PL to be incident on the combiner unit 13 on the basis of information input from the detection apparatus and the navigation apparatus. The reflection member 15 reflects the irradiation light PL toward the combiner unit 13. The irradiation light PL passes through the opening 12a from the near side of the combiner unit 13 and is incident on a surface to be irradiated of the combiner unit 13. The irradiation light PL incident on the combiner unit 13 forms a virtual image on the far side of the combiner unit 13. In the present embodiment, the opening 12a is provided in an area of the top plate TP on the near side of the opening 12. The opening 12a may be closed by a translucent member (not shown) such as a transparent film.

As shown in FIG. 3, the irradiation light PL passes through the opening 12a and is incident on the combiner unit 13. More specifically, the opening 12a has a predetermined size and shape such that the irradiation light PL can pass through, whereby an optical path of the irradiation light PL to the combiner unit 13 is formed. The retracted position of the shutter 20 is set to not interfere with the optical path of the irradiation light PL.

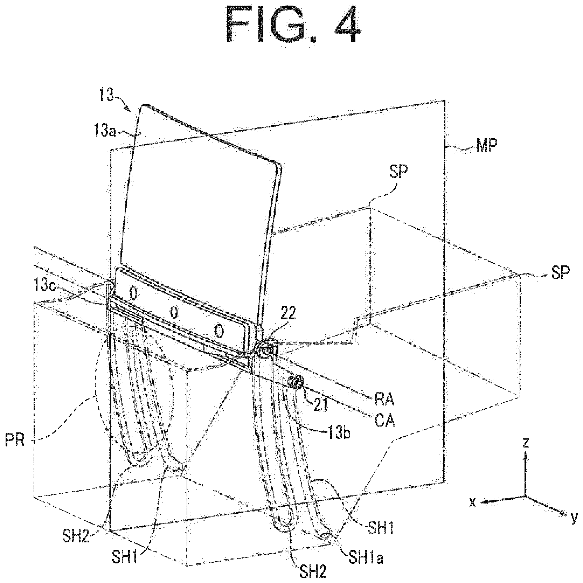

Next, the combiner unit 13 retracted in the housing 11 and a moving mechanism 30 thereof will be described in detail with reference to FIGs. 4 to 11.

The moving mechanism 30 includes: first and second combiner rails SH1 and SH2 which are provided to be opposed to each other on a pair of side plate portions SP and serve as first and second cam mechanisms each having ends corresponding to the retracted position and the developed position; first and second slide members 32 and 34 and a second pinion gear 33 which are provided on a side plate portion SP and are moved along the side plate portion SP by a first pinion gear 31 in a direction three-dimensionally intersecting with at least either one of the first and second combiner rails SH1 and SH2; and a driving lever 26.

FIG. 4 is a perspective view of the combiner unit 13, showing a relationship with the side plate portions SP. FIG. 5 is a perspective view of the display apparatus 10 with the combiner unit 13 in the retracted position, for describing the moving mechanism of the combiner unit 13. In FIG. 5, a cover portion SPa and the top plate TP are shown in double-dotted dashed lines.

The combiner unit 13 will initially be described with reference to FIGs. 4 and 5.

As shown in FIG. 4, the combiner unit 13 includes a combiner portion 13a and a holding portion 13b which holds a bottom end portion of the combiner portion 13a.
The holding portion 13b includes two pairs of first and second pins 21 and 22 (first and second protrusions) which are formed on both respective side portions of the holding portion 13b in the width direction (y-axis direction). The pair of first pins 21 (first protrusions) are provided in a position of the holding portion 13b far from the bottom end portion of the combiner portion 13a. The pair of second pins 22 (second protrusions) are provided in a position of the holding portion 13b close to the bottom end portion of the combiner portion 13a. The first and second pins 21 and 22 are guided by the first and second combiner rails SH1 and SH2 formed on the respective side plate portions SP. The first and second pins 21 and 22 are formed in the shape of columns protruding outward in the width direction (y-axis direction) of the housing 11 so that a rotation axis RA of the pair of second pins 22 and a center line CA of the pair of first pins 21 are parallel to each other. If the pair of second pins 22 serving as the rotation axis is located at the top end portions of the second combiner rails SH2, the combiner unit 13 rotates about the rotation axis RA as the first pins 21 are moved.

An eaves portion 13c is provided on the far side of the holding portion 13b, whereby a gap between the combiner unit 13 in the developed position shown in FIG. 3 and the opening 12 can be closed. The eaves portion 13c can also prevent dropping of foreign objects and the like into the gap, i.e., into the apparatus.

As shown in FIGs. 4 and 5, the pair of mutually-opposed parallel side plate portions SP of the housing 11 are each provided with the opposed first and second combiner rails SH1 and SH2 for guiding the first and second pins 21 and 22 of the combiner unit 13. In other words, the moving mechanism 30 includes the first and second combiner rails SH1 and SH2 which are provided on the side plate portions SP and extend along the side plate portions SP. The combiner unit 13 includes the first pins 21 engaged with the first combiner rails SH1 and the second pins 22 engaged with the second combiner rails SH2.

The first and second combiner rails SH1 and SH2 form the moving path of the combiner unit 13. The concept of the rails includes a path. Specifically, the pair of first combiner rails SH1 are provided along the pair of side plate portions SP. The pair of first combiner rails SH1 are formed in a curved shape. The pair of first combiner rails SH1 are symmetrical with respect to a plane MP intermediate between the side plate portions SP (hereinafter, referred to simply as symmetrical). The pair of first combiner rails SH1 extend obliquely from the top end portions (developed position side) to the bottom end portions (retracted position side) of the side plate portions SP. The pair of first combiner rails SH1 are formed in the same shape. The pair of second combiner rails SH2 are formed in a curved shape at a distance from the pair of first combiner rails SH1 in the depth direction. The pair of second combiner rails SH2 are provided along the pair of side plate portions SP, and are symmetrically formed. The pair of second combiner rails SH2 extend obliquely from the top end portions (developed position side) to the bottom end portions (retracted position side) of the side plate portions SP, and are formed in the same shape. The first and second combiner rails SH1 and SH2 have a parallel curve region PR. As employed herein, the parallel curve region PR refers to an area in which the first and second combiner rails SH1 and SH2 are parallel to each other (the distance therebetween is constant).

The first combiner rails SH1 are formed as through holes (cam grooves) through which the first pins 21 of the combiner unit 13 can be inserted. The second combiner rails SH2 are formed as cam grooves into which the second pins 22 of the combiner unit 13 are inserted. The combiner unit 13 serving as the display member thus makes contact with and moves along the first and second combiner rails SH1 and SH2, whereby the combiner unit 13 can move between the retracted position in which the combiner unit 13 is retracted in the housing 11 and the developed position in which the combiner unit 13 protrudes from the opening 12 of the housing 11. The retracted position of the combiner unit 13 corresponds to the bottom end portions of the respective first and second combiner rails SH1 and SH2. The developed position of the combiner unit 13 corresponds to the top end portions of the respective first and second combiner rails SH1 and SH2.

In the present embodiment, as the first and second pins 21 and 22 move, the combiner unit 13 is moved in between the pair of side plate portions SP by the first and second pins 21 and 22 according to the first and second combiner rails SH1 and SH2. That is, the combiner unit 13 moves toward the top plate TP of the housing 11, moves away from the same, or moves up and down. In the present embodiment, the second combiner rails SH2 are provided in a substantially arc shape on the side plate portions SP. The combiner unit 13 thus moves on an arcuate path in part. In other words, the combiner unit 13 can be rotated and translated according to the second combiner rails SH2.

Next, the moving mechanism 30 of the combiner unit 13 will be described.

As shown in FIG. 5, the moving mechanism 30 is provided on at least either one of the two mutually opposed side plate portions SP of the housing 11, and moves the combiner unit 13 by using driving force of a driving source 16. In the present embodiment, the moving mechanism 30 is provided on one of the two opposed side plate portions SP. For example, the driving source 16 mounted in the housing 11 includes an electric motor for generating driving force. The moving mechanism 30 includes the first pinion gear 31 which is rotated by the driving source 16 via a not-shown gear train. The rotation of the first pinion gear 31 transmits the driving force to the moving mechanism 30.
The moving mechanism 30 moves the combiner unit 13 by using the transmitted driving force.

Specifically, the moving mechanism 30 includes the first and second slide members 32 and 34 which move along the side plate portion SP, in addition to the first and second combiner rails SH1 and SH2. The moving mechanism 30 also includes the second pinion gear 33 which is a transmission member for transmitting driving force of the first slide member 32 to the second slide member 34. The moving mechanism 30 further includes the first slide member 32, the second slide member 34, a first slide rail SL1 which forms the path of the first slide member 32, and a second slide rail SL2 which forms the path of the second slide member 34. The first and second slide rails SL1 and SL2 are grooves or through holes formed in the surface of the side plate portion SP.

Specifically, the first and second slide rails SL1 and SL2 are provided on the side plate portion SP on the far side of the first combiner rail SH1 to extend straight at an angle to the first combiner rail SH1 and in parallel with each other. More specifically, the first and second slide rails SL1 and SL2 are formed in a direction oblique to the bottom of the housing 11 from the near side to the far side.

The first and second slide members 32 and 34 include first and second slide pins 32A and 34A which are inserted into the first and second slide rails SL1 and SL2, respectively. The first and second slide pins 32A and 34A are provided on the first and second slide members 32 and 34, respectively. The first and second slide pins 32A and 34A are provided on both end portions of the first and second slide members 32 and 34.

The first slide member 32 includes a first rack gear portion 32G which meshes with the first pinion gear 31. The driving force (rotating force) is transmitted from the first pinion gear 31 rotated by the driving source 16 to the first slide member 32 via the first rack gear portion 32G, whereby the first slide member 32 moves along the first slide rail SL1.

The second pinion gear 33 serving as a transmission member is rotatably attached to an end portion of the first slide member 32. The second pinion gear 33 is translated according to the path of the first slide rail SL1 along with the first slide member 32.

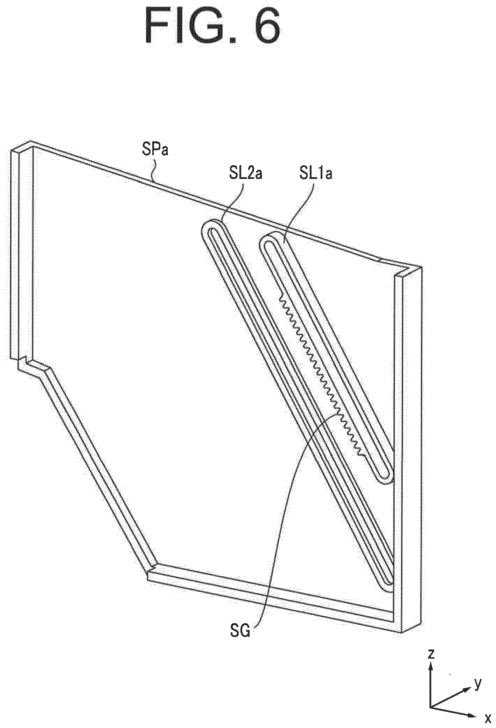

FIG. 6 is a perspective view of the cover portion SPa of the side plate portion of the display apparatus 11, seen from inside.

As shown in FIG. 6, the cover portion SPa of the side plate portion SP includes a third rack gear portion SG which meshes with the second pinion gear 33. A first slide rail SL1a and a second slide rail SL2a formed on the cover portion SPa are provided in parallel with each other. The first slide pins 32A of the first slide member 32 are inserted into the first slide rail SL1a. The second slide pins 34A of the second slide member 34 are inserted into the second slide rail SL2a. The first slide rail SL1a is formed in parallel with and in the same shape as the first slide rail SL1 on the side plate portion SP side. The second slide rail SL2a is formed in parallel with and in the same shape as the second slide rail SL2 on the side plate portion SP side.

As shown in FIG. 5, the cover portion SPa is attached to cover the main body of the side plate portion SP. A space for accommodating the moving mechanism 30 is formed between the cover portion SPa and the side plate portion SP. The second pinion gear 33 is translated with the first slide member 32 and meshes with the third rack gear portion SG to make a rotational movement.

As shown in FIG. 5, the second slide member 34 includes a second rack gear portion 34G which meshes with the second pinion gear 33. The direction of the tooth rows of the first, second, and third rack gear portions 32G, 34G, and SG is configured to be parallel with the first and second slide rails SL1, SL1a, SL2, and SL2a. As the second pinion gear 33 makes a rotational movement, the second slide member 34 is thus translated according to the second slide rail SL2. In the present embodiment, the first and second slide members 32 and 34 slide in a direction obliquely crossing the depth direction (x-axis direction) of the housing 11.

The second pinion gear 33 increases the amount of movement of the first slide member 32 and transmits the increased amount of movement to the second slide member 34. More specifically, this second slide pinion gear 33 moves the second slide member 34 relative to the first slide member 32 and amplifies (enhances) the amount of movement of the second slide member 34.

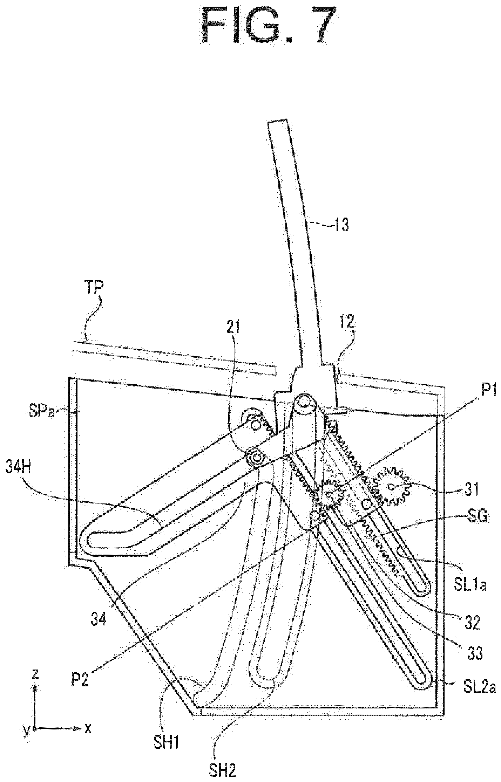

FIGs. 7 to 9 are internal views of the display apparatus 10 when the combiner unit 13 is developed, retracted, and moving therebetween. In FIGs. 7 to 9, the side plate portion SP, the shutter 20, the driving lever 26, and the like are omitted. The first and second combiner rails SH1 and SL2 are shown in broken lines.

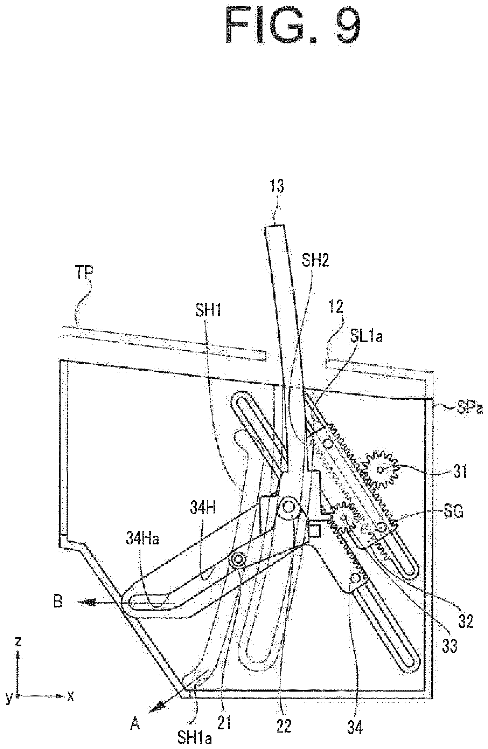

Specifically, as shown in FIG. 7, according to the rotation of the first pinion gear 31, the first slide member 32 makes a slide movement (FIG. 9), for example, from a position P1 (position of the rotation axis of the second pinion gear 33) before the slide movement when the combiner unit 13 is developed to a position Q1 (position of the rotation axis of the second pinion gear 33) when the combiner unit 13 is retracted as shown in FIG. 8. The length of movement of the first slide member 32 from the position P1 to the position Q1 will be referred to as length L. Here, as shown in FIG. 7, the second slide member 34 makes a slide movement from a position P2 (position of the end portion of the second slide member 34) before the movement to a position Q2 (position of the end portion of the second slide member 34) a length (X (times) × L) away as shown in FIG. 8.

Here, the amplification X is a number greater than 1, including integers such as 2 and 3, and fractions such as 1.1 and 1.5. In the present embodiment, X = 2 since the second pinion gear 33 rotates in mesh with the third rack gear portion SG which has the same tooth pitch as that of the first rack gear portion 32G. The second pinion gear 33 moves the second slide member 34 by the amount of movement twice (2L) that of the first slide member 32. If the second pinion gear 33 is a two-stage gear, the amount of movement of the second slide member 34 meshing with the stage of a greater number of teeth can be further increased with respect to the first slide member 32 meshing with the stage of a smaller number of teeth.

In the present embodiment, the second pinion gear 33 moves the second slide member 34 by the amount of movement twice that of the first slide member 32. The first slide member 32 and the second slide member 34 both move relative to the side portion SP simultaneously, and move toward or away from each other.

As shown in FIGs. 5, 7, and 8, the second slide member 34 has, in one of its end portions, a third slide rail 34H serving as a third cam structure into which the first pin 21 of the combiner unit 13 is inserted. In the present embodiment, the third slide rail 34H is formed in the second slide member 34 as a long hole extending straight at right angles to the tooth row direction of the second rack gear portion 34G of the second slide member 34 (moving direction of the second slide member 34). The first pin 21 is inserted into (caught in) both the first combiner rail SH1 and the third slide rail 34H. As the second slide member 34 is translated, the first pin 21 is pressed against the inner wall surface of the third slide rail 34H of the second slide member 34 and moved according to the first combiner rail SH1. In other words, the second slide member 34 functions as a driving member for directly moving the combiner unit 13. The combiner unit 13 moves according to the movement of the second slide member 34.

Specifically, the combiner unit 13 shown in FIG. 7 moves from the developed position so that the first slide member 32 and the second slide member 34 move away from each other, and reaches the retracted position shown in FIG. 8. On the other hand, if the first slide member 32 and the second slide member 34 move toward each other, the combiner unit 13 in the retracted position shown in FIG. 8 moves from the retracted position and reaches the developed position.

Next, the orientation of the combiner unit 13 during the accommodating operation of the combiner unit 13 will be described with reference to FIGs. 5 and 7 to 9.

During transition from the developed state shown in FIG. 7 to the retracted state shown in FIG. 8, the combiner unit 13, as shown in FIG. 9, starts to move upward after the first and second pins 21 and 22 of the combiner unit 13 reach the parallel curve region PR of the first and second combiner rails SH1 and SH2. Here, the combiner unit 13 moves so that the side surface of the combiner portion 13a is along the second combiner rail SH2.

Here, the moving mechanism 30 of the display apparatus 10 includes a tilt mechanism for tilting the combiner unit 13 near the retracted position. As employed herein, to tilt means to change the inclination of the combiner unit 13 with respect to the housing 11 (for example, top plate). As shown in FIG. 9, the tilt mechanism includes an end portion SH1a (retracted position side) of the first combiner rail SH1, an end portion (retracted position side) of the third slide rail 34H of the second slide member 34 (driving member), and a bent portion 34Ha formed on the end portion side (retracted position side) of the third slide rail 34H. The end portion (retracted position side) of the third slide rail 34H lies on the retracted position side of the bent portion 34Ha. The end portion SH1a of the first combiner rail SH1 is a groove portion that is integrally formed on the end portion of the first combiner rail SH1 and guides the first pin 21 (first protrusion) near the retracted position to the retracted position. The bent third slide rail 34H is bent from the bent portion 34Ha in an intermediate portion (portion in an intermediate position between both ends) of the third slide rail 34H of the second slide member 34 (driving member) toward the retracted position. When seen from the side plate portion SP (plan view), the extending direction of the bent portion 34Ha extends in a direction three-dimensionally crossing the extending direction (arrow A) of the end portion SH1a of the first combiner rail SH1. The end portion of the third slide rail 34H on the retracted position side of the bent portion 34Ha is formed in a direction away from the end portion SH1a of the first combiner rail SH1.

In other words, in the present embodiment, the first cam structure SH1 which is the first combiner rail includes a first region (parallel curve region PR) parallel to the second cam structure SH2 which is the second combiner rail, and a second region (the area of the end portion SH1a) bent away from the second cam structure SH2 in the bottom end portion of the first cam structure SH1. The second region is bent to the near side of the housing 11.

In the present embodiment, the third cam structure 34H which is the third slide rail includes the bent portion 34Ha. The bent portion 34Ha extends at an angle with respect to the extending direction of the second region (end portion SH1a) of the first cam structure SH1. The bent portion 34Ha is bent away from the second region.

The combiner unit 13 is tilted (the inclination of the combiner unit 13 with respect to the housing 11 (for example, top plate TP) is changed) mainly by the end portion SH1a of the first combiner rail SH1. Specifically, the end portion SH1a lying at the bottom end of the first combiner rail SH1 is formed to extend away from the second combiner rail SH2 (the arrow A of the extending direction). The first pin 21 of the combiner unit 13 thus rotates relative to the second pin 22. As a result, the combiner unit 13 tilts somewhat to the far side from the moving state while descending. More specifically, as shown in FIG. 8, a top end portion 13T of the combine unit 13 on the developed position side moves away from the opening 12 of the housing 11 and moves toward the retracted position. Since the combiner unit 13 can change the inclination with respect to the housing 11 as approaching the retracted position, the length of the housing 11 in the height direction can be reduced.

The end portion (retracted position side) of the third slide rail 34H of the second slide member 34 is formed to extend further away from the parallel curve region PR of the first and second combiner rails SH1 and SH2 (the arrow B of the extending direction). In the embodiment, the end portion (retracted position side) of the third slide rail 34H is formed in a substantially horizontal direction. If the bottom end of the first combiner rail SH1 and the bottom end of the third slide rail 34H of the second slide member 34 are close to substantially parallel, there is a problem that the third slide rail 34H of the second slide member 34 is not able to move the first pin 21 near the retracted position. However, the third slide rail 34H includes the bent portion 34Ha and is extended in the direction (arrow B) away from the extending direction (arrow A) of the first combiner rail SH1. In other words, the end portion (retracted position side) of the third slide rail 34H is not parallel to the end portion SH1a of the first combiner rail SH1. The first pin 21 near the retracted position can thus move on the first combiner rail SH1 and the end portion SH1a without a problem.

As shown in FIG. 8, such a tilt mechanism rotates the combiner unit 13 moving near the retracted position so that the end portion 13T of the combiner unit 13 can be smoothly tilted to the far side away from the opening 12 of the housing 11, and moved to the retracted position.

Next, the movement of the shutter 20 according to the developing operation of the combiner unit 13 will be described with reference to FIGs. 5 to 12.

FIGs. 9 to 12 are schematic diagrams for describing the movement of the combiner unit 13 and the shutter 20 of the display apparatus 10 from the retracted position to the developed position of the combiner unit 13.

As shown in FIG. 5, the shutter 20 includes the flat plate-shaped member having a high shielding property, and has an L-shaped sectional shape. The shutter 20 is provided across the pair of side plate portions SP. Pins (protrusions) 20a to be inserted into first and second shutter rails SH3 and SH4 serving as fifth and sixth cam structures to be described below, respectively, are formed on side portions of the shutter 20 opposed to the side plate portions SP. The pins 20a are provided on each of the pair of side portions of the shutter 20. The shutter 20 includes a fourth slide rail 20H serving as a fourth cam structure of straight shape which extends in a direction from the developed position to the retracted position.

The first and second shutter rails SH3 and SH4 of straight shape or curved shape for guiding a pair of sliding pins 20a, respectively, are formed on the surface of the side plate portion SP on the moving mechanism 30 side. The pins 20a of the shutter 20 are inserted into the first and second shutter rails SH3 and SH4, whereby the pins 20a of the shutter 20 are guided in an oblique direction from the top end portion (developed position side) to the bottom end portion (retracted position side) of the side plate portion SP. That is, if the pins 20a are moved to the bottom end portions of the first and second shutter rails SH3 and SH4 on the retracted position side, the shutter 20 comes to the retracted position. If the pins 20a are moved to the top end portions of the first and second shutter rails SH3 and SH4 on the developed position side, the shutter 20 comes to the closed position. Notches SPc corresponding to the retracted position of the shutter 20 are symmetrically formed in the top end portions of the respective side plate portions SP near the top end portions of the first and second shutter rails SH3 and SH4. The shutter 20 in the retracted position is arranged in a position to not intersect with the optical path of the light source 14, and a part of the shutter 20 is accommodated in the area formed by the notches SPc.

The driving lever 26 for moving the shutter 20 via the fourth slide rail 20H of the shutter 20 is provided on the moving mechanism 30 side of the side plate portion SP. The driving lever 26 includes a pin 26a (protrusion) which moves inside the fourth slide rail 20H, a pin 26b (protrusion) which serves as a fulcrum when the driving lever 26 rotates along the side plate portion SP, and a pin 26c (protrusion) which makes contact with the second slide member 34. The pin 26a which moves inside the fourth slide rail 20H is provided on the end portion (top end portion) of the driving lever 26 on the developed position side.
The pin 26b (protrusion) which serves as the fulcrum when the driving lever 26 rotates along the side plate portion SP is provided on the end portion (bottom end portion) of the driving lever 26 on the retracted position side.

The second slide member 34 includes a cam portion 34C having a slope to make contact with the pin 26c of the driving lever 26. The shutter 20 moves from the closed position to the retracted position through the following operation. FIG. 5 shows the shutter 20 that is in the closed position, and the first and second slide members 32 and 34 and the driving lever 26 which are positioned away from each other. To move the shutter lying in the closed position to the retracted position, the driving source 16 is initially driven, and the first slide member 32 moves to approach the second slide member 34.

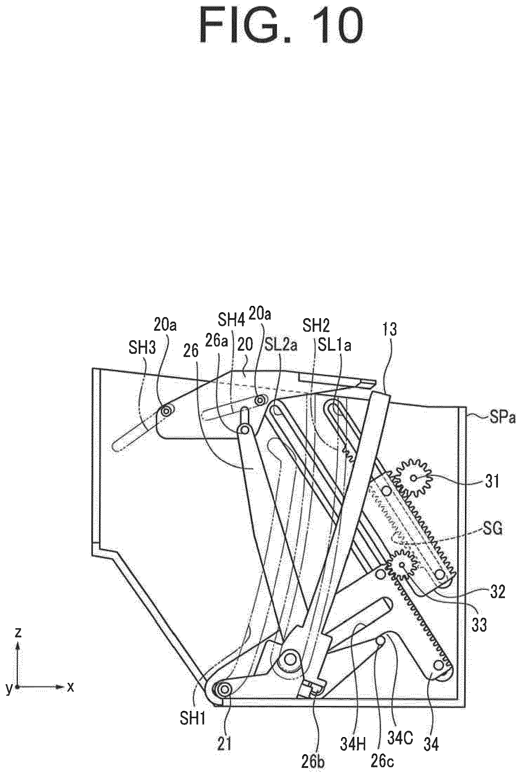

A spring (not shown) is attached to the driving lever 26. Referring to FIG. 10, the driving lever 26 is thus biased in a counterclockwise direction with the pin 26b as the axis. The pin 26c of the driving lever 26 then makes contact with the cam portion 34C of the second slide member 34 while moving in a direction such that the pin 26c approaches the top end portion (developed position side) of the side plate portion SP. The driving lever 26 thereby rotates counterclockwise about the pin 26b.

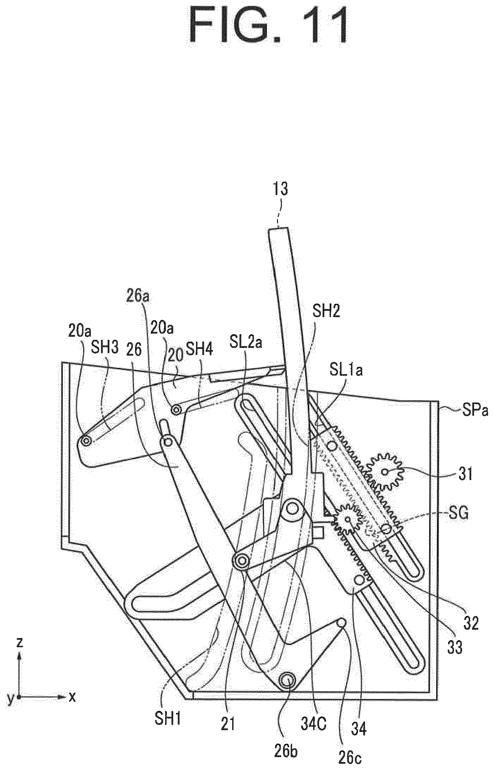

Here, the pin 26a of the driving lever 26 moves toward the top end portion (developed position side) of the side plate portion SP. As shown in FIG. 11 and the like, when the shutter 20 reaches the retracted position, the cam portion 34C of the second slide member 34 is separated from the pin 26c of the driving lever 26. The pin 26a inserted in the fourth slide rail 20H of the shutter 20 thus moves according to the fourth slide rail 20H, whereby the shutter 20 is moved to the bottom end portion (retracted position side) of the side plate portion SP so that the shutter 20 reaches the retracted position.

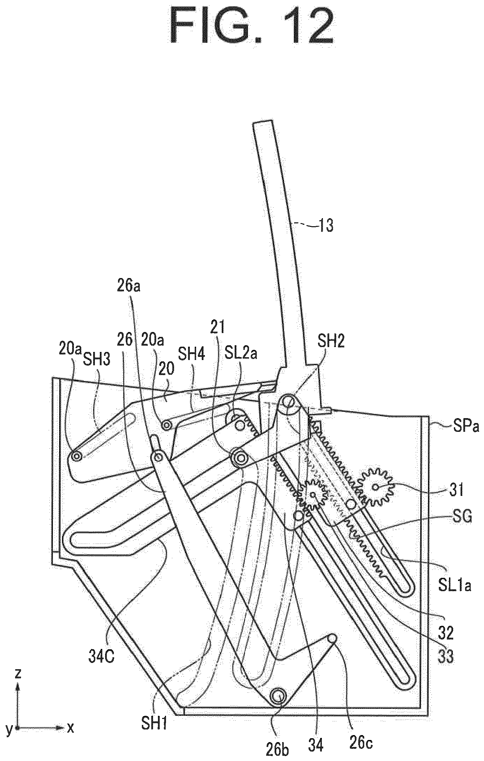

As shown in FIG. 12, while the combiner unit 13 of the display apparatus 10 is used by the user, the slope of the cam portion 34C of the second slide member 34 is separated from the pin 26c of the driving lever 26 and the driving lever 26 is released from the cam portion 34C of the second slide member 34. Here, the position of the driving lever 26 is held by the biasing force of the spring.

Next, the shutter 20 moves from the retracted position (FIG. 12) to the closed position (FIG. 10) through the following operation. To move the shutter 20 lying in the retracted position to the closed position, the driving source 16 is driven, and the first slide member 32 moves relative to the second slide member 34 into the state shown in FIG. 10 through the state shown in FIG. 11. The cam portion 34C of the second slide member 34 comes into contact with the pin 26c of the driving lever 26, and then moves the pin 26c toward the bottom end portion (retracted position side) of the side plate portion SP and rotate the driving lever 26 clockwise about the pin 26b.

Here, the pin 26a of the driving lever 26 is moved toward the bottom end portion (retracted position side) of the side plate portion SP. The pin 26a inserted in the fourth slide rail 20H of the shutter 20 thus moves according to the fourth slide rail 20H to move the shutter 20 to the top end portion of the side plate portion SP so that the shutter 20 reaches the closed position. Here, the position of the driving lever 26 is held by the cam portion 34C. The driving lever 26 itself may rotate clockwise about the pin 26c by using the own weight of the driving lever 26.

As shown in FIG. 10, when not in operation, the combiner unit 13 is obliquely retracted in the retracted position. The combiner unit 13 is covered with the shutter 20, and the entire opening 12 (FIG. 2) is closed by the shutter 20. Here, the pin 26a inserted in the fourth slide rail 20H of the shutter 20 pushes the shutter 20 in the depth direction according to the fourth slide rail 20H to move the shutter 20 to the closed position.

As shown in FIGs. 11 and 12, when in operation, the display apparatus 10 is powered on. A motor 16 (FIG. 5) serving as the driving source becomes conducting, the first pinion gear 31 rotates to move the first slide member 32 in the near direction (upper left direction in the diagrams), and the moving mechanism 30 starts driving. Here, the second pinion gear 33 moves with the first slide member 32, and the second pinion gear 33 rotates on the third rack gear portion SG to transmit the driving force to the second slide member 34. The second slide member 34 thus starts to move to the near side (upper left direction in the diagrams), and the cam portion 34C of the second slide member 34 is separated from the pin 26c of the driving lever 26 to move the shutter 20 to the near side (left direction in the diagrams).

As described above, in the present embodiment, the moving mechanism 30 including the first and second slide members 32 and 34 and the transmission member 33 transmitting the amount of movement of the first slide member 32 to the second slide member 34 while increasing the amount of movement can generate a relatively large amount of movement (stroke) of the second slide member 34. The shutter 20 and the combiner unit 13 can thus be moved within saved space.

In the present embodiment, the moving mechanism 30 for driving the shutter 20 and the combiner unit 13 is described to be constituted by combining rack mechanisms and pinion mechanisms. However, this moving mechanism 30 is not limited thereto. While the moving mechanism 30 is described to include the first and second slide members 32 and 34 and the second pinion gear 33 (transmission member), the configuration of the moving mechanism 30 is not limited thereto. For example, the amount of movement can be amplified in three stages by providing an intermediate slide member between the first and second slide members 32 and 34 and providing pinion gears therebetween.

In the present embodiment, the tilt mechanism is provided on the bottom end portion (retracted position side) of the side plate portion SP. However, this is not restrictive, and a tilt mechanism may also be provided on the top end portion (developed position side) of the side plate portion SP. For example, the bent portion SH1a is provided on the bottom end portion (retracted position side) of the first combiner rail SH1 shown in FIG. 8, and a bent portion SH1b is provided on the top end portion (developed position side) of the first combiner rail SH1. The foregoing tilt mechanism can be implemented by the provision of the bent portion on the top end portion side of the first combiner rail SH1.

### REFERENCE SIGNS LIST

- 10: display apparatus
- 11: housing
- TP: top plate
- 12: opening
- 12a: opening
- SP: side plate portion
- 13: display member (combiner unit)
- 13c: eaves portion
- 20: shutter
- 21: first pin (first protrusion)
- 22: second pin (second protrusion)
- 30: moving mechanism
- 32: first slide member
- 33: transmission member (second pinion gear)
- 34: second slide member
- SH1: first combiner rail (first cam structure)
- SH2: second combiner rail (second cam structure)
- 34H: third slide rail (third cam structure)
- 34Ha: bent portion

## Claims

1. A display apparatus comprising:
a housing including a pair of opposed side plate portions;
a moving mechanism provided on at least one of said side plate portions, said moving mechanism including a first cam structure and a second cam structure extending along said at least one side plate portion; and
a display member including a first pin engaged with said first cam structure and a second pin engaged with said second cam structure, wherein
said first cam structure includes a first region parallel to said second cam structure, and a second region bent away from said second cam structure in a bottom end portion of said first cam structure.

2. The display apparatus according to claim 1, wherein:
said moving mechanism includes a third cam structure that extends along said at least one side plate portion at an angle with respect to said first cam structure, and a driving member configured to move along said at least one side plate portion; and
said first pin is engaged with said first and third cam mechanisms, and moved by movement of said driving member.

3. The display apparatus according to claim 2, wherein said third cam structure includes a bent portion, and said bent portion extends at an angle with respect to an extending direction of said second region.

4. The display apparatus according to claim 3, wherein said bent portion is bent away from said second region side.

5. The display apparatus according to any one of claims 2 to 4, wherein said moving mechanism includes a first slide member configured to move along said at least one side plate portion, a second slide member serving as said driving member that moves along said at least one side plate portion and moves said display member, and a transmission member arranged in contact with said first slide member and said second slide member, said transmission member being configured to transmit an amount of movement of said first slide member to said second slide member while increasing the amount of movement.

6. The display apparatus according to claim 5, wherein:
said moving mechanism includes a first pinion gear that is rotated by a driving source;
said first slide member includes a first rack gear portion that meshes with said first pinion gear;
said second slide member includes a second rack gear portion;
said transmission member includes a second pinion gear that is fixed to said first slide member and meshes with said second rack gear portion, a rotation axis of said transmission member being translated according to the movement of said first slide member; and
said at least one side plate portion on which said moving mechanism is provided includes a third rack gear portion that meshes with said second pinion gear.

7. The display apparatus according to claim 5 or 6, comprising a shutter configured to move according to movement of said second slide member and close said opening.

8. The display apparatus according to claim 7, comprising:
a light source provided in a position not interfering with said shutter or said display member in said housing, said light source generating irradiation light; and
a reflection member accommodated in said housing, said reflection member being configured to reflect the irradiation light from said light source toward said display member.
